# EUROPEAN PATENT APPLICATION

(11) **EP 3 736 309 A1**
(43) Date of publication of application: **11.11.2020**
(21) Application number: 19172956.5
(22) Date of filing: 07.05.2019
(51) Int. Cl.: C08L 69/00, C08K 3/34, C08K 3/22

(54) **POLYCARBONATE COMPOSITION WHICH EXHIBITS A FLECKED APPEARANCE WHEN MOLDED**

(71) Applicant: Trinseo Europe GmbH, 8810 Horgen (CH)
(72) Inventor: VAN NUFFEL, Claude T.E., 9041 Oostakker (BE)
(74) Representative: Hoffmann Eitle

(57) **Abstract**

Disclosed are compositions comprising a) one or more polycarbonates; b) one or more first colorants; c) one or more flame retardants; and d) one or more particles having a melting point above the temperature at which polycarbonates are processed wherein the particles are coated with an organic polymer having a melting point above the processing temperature of the one or more polycarbonates; wherein the composition when molded exhibits a flecked appearance. The particles have a second colorant bound to the surface of the particles by the organic polymer. The organic polymer may be crosslinked. The one or more polycarbonates may comprise post-consumer recycled polycarbonates. Disclosed are molded products prepared from the disclosed compositions. The molded products exhibit good properties as disclosed herein. The molded products have a flecked appearance.

## Description

### FIELD

The disclosure relates to polycarbonate compositions containing particles coated with organic polymers useful in preparing molded products which have a flecked appearance. The compositions disclosed prepare molded structures having good fire-retardant properties. The polycarbonate compositions may contain recycled polycarbonate content.

### BACKGROUND

Polycarbonate and copolymers containing carbonate units are utilized as the in a variety of molded structures. Polycarbonates and copolymers containing carbonate units form molded structures that are rigid. The molded structures may be used for a variety of uses, including cases for electronics, automobile parts, medical devices, home appliances, loudspeakers, home furnishings and the like. Fire retardancy of such structures is an important safety consideration. The market continues to demand improved fire retardancy while maintaining the premium properties of molded structures. In addition, there is a demand to recycle used polycarbonate or copolymers thereof. The use of recycled polycarbonate or copolymers thereof in molded products is desired, provided the structures provide fire retardancy and maintain the aforesaid premium properties. Recycled polycarbonates and copolymers thereof may be sourced from post-consumer waste such as water bottles, soda bottles and the like. Such recycled polycarbonates may contain polyester impurities, for instance in amounts of 0.1 to 1.0 percent by weight. The presence of polyesters may negatively impact fire retardancy of structures containing recycled polycarbonates. Particle filled polycarbonate containing compositions are known, see KR 2017047849 and KR2017028012. Flecked polycarbonates are known and are known to exhibit poor fire-retardant properties, see for example JP 2009120637. The disclosed compositions do not provide compositions which can provide flecked molded products having excellent fire-retardant properties and the premium properties the market expects from polycarbonate compositions. The references do not provide guidance as to how to achieve such properties using post-consumer recycled polycarbonates.

What is needed are compositions containing polycarbonates or copolymers of polycarbonates which form molded structures having a flecked appearance having improved fire retardancy while maintaining the premium properties of molded products containing polycarbonate or copolymers thereof. What are needed are compositions including recycled polycarbonate or copolymers thereof that may contain polyesters and molded products prepared therefrom which exhibit improved fire retardancy without sacrificing other properties, such as excellent tensile strength at yield, tensile strength at break, tensile elongation at yield, tensile elongation at break and Notched Izod impact strength, and the like. What are also needed are molded compositions prepared from such compositions that exhibit improved fire retardancy and such premium properties.

### SUMMARY

Disclosed are compositions comprising a) one or more polycarbonates; b) one or more first colorants; c) one or more flame retardants; and d) one or more particles having a melting point above the temperature at which polycarbonates are processed for molding wherein the particles are coated with an organic polymer having a melting point above the melting point of the one or more polycarbonates; wherein the composition when molded exhibits a flecked appearance. The particles have a second colorant bound to the surface of the particles by the organic polymer. The first colorant and second colorant separately in each occurrence comprise a pigment or a dye and the color of the first colorant and second colorant contrast from one another. The organic polymer may be crosslinked. The particles may be selected from metal, mineral, ceramic, polymeric, or glass particles. The particles may have a particle size range in the range of from about 10 to about 700 microns. The particles may be synthetic or natural minerals. The particles may be spherical, flakes, fibers and/or platelets. The organic polymer may comprise one or more polyepoxide, polyacrylate-siloxane, polyacrylate, polyepoxy-siloxane, polybenzoxazine, polysiloxane, polyurethane, urethane-acrylate, phenolic and alkyd polymers. The organic polymer may comprise one or more of polyepoxide and polyacrylate-siloxane polymers. The particles may be present in the composition in an amount of about 0.01 to about 0.30 percent by weight based on the weight of the composition. The particles may be present in the composition in an amount of about 0.05 to about 0.15 percent by weight based on the weight of the composition. The one or more polycarbonates may comprise post-consumer recycled polycarbonates. The one or more polycarbonates may comprise post-consumer recycled polycarbonate and virgin polycarbonate. The one or more polycarbonates may comprise post-consumer recycled polycarbonate and two or more virgin polycarbonates having different melt flow rates. The one or more polycarbonates may comprise one or more virgin polycarbonates which is branched and one or more virgin polycarbonates which is linear. The composition may contain an impact modifier. The composition may comprise a dispersed phase comprising an impact modifier. The dispersed phase may comprise impact modifier particles of about 0.05 microns to about 6.0 microns. The impact modifier may be a butadiene rubber or a core shell rubber.

The compositions disclosed herein may be used to prepare molded structures. Disclosed are molded structures prepared from the disclosed compositions. The molded structures have a flecked appearance. The molded structures exhibit a UL 94 Rating at 1.5 mm thickness of V-0 or at a 1.0 mm thickness of V-1.

The polymeric composition may comprise one of more of one or more non-halogenated flame retardants, one or more antioxidants, one or more UV Absorbers, one or more lubricants and the like. The one or more non-halogenated flame retardants comprise one or more of bisphosphate esters, polyphosphonates, and polyphosphazenes.

The molded structures prepared from the disclosed compositions exhibit excellent fire retardancy as exhibited by a UL 94 rating disclosed herein. The molded products of the disclosed composition exhibit excellent tensile strength at yield determined using ASTM D638 test, tensile strength at break determined using ASTM D638 test, tensile elongation at yield determined using ASTM D638 test, tensile elongation at break determined using ASTM D638 test and Notched Izod impact strength determined using ASTM D256 test. The molded products of the disclosed composition exhibit excellent tensile strength at yield of about 60 MPa or greater or 60 MPa or greater. The molded products of the disclosed composition exhibit excellent tensile strength at break of about 47 MPa or greater or 49 MPa or greater. The molded products of the disclosed composition exhibit tensile elongation at yield of about 4 percent or greater or about 5 percent or greater. The molded products of the disclosed composition exhibit tensile elongation at break of about 45 percent or greater or about 80 percent or greater, or about 90 percent of greater. The molded products of the disclosed composition exhibit excellent Notched Izod impact strength of about 200 J/m or greater, about 500 J/m or greater, about 600 J/m or greater or about 700 J/m or greater. The molded structures may be used as cases for electronic products, home appliances, loudspeakers, home or office furnishings and the like.

### DESCRIPTION OF FIGURES

Figure 1 is a picture of a molded part based on Example 1 which shows the flecks on the surface.
Figure 2 is a picture of a molded part based on Example 2 which shows the flecks on the surface.
Figure 3 is a picture of a molded part based on Example 4 which shows the flecks on the surface.
Figure 4 is a picture of a molded part based on Example 7 which shows the flecks on the surface.

### DETAILED DESCRIPTION

The explanations and illustrations presented herein are intended to acquaint others skilled in the art with the disclosure, its principles, and its practical application. Accordingly, the specific embodiments of the present disclosure as set forth are not intended as being exhaustive or limiting of the claims. The scope of the claims should, therefore, be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

Disclosed are compositions comprising a) one or more polycarbonates; b) one or more first colorants; c) one or more flame retardants; and d) one or more particles having a melting point above the temperature at which polycarbonates are processed for molding wherein the particles are coated with an organic polymer having a melting point above the melting point of the one or more polycarbonates; wherein the composition when molded exhibits a flecked appearance. Polycarbonates have glass transition temperatures of about 147 °C or greater and flow at temperatures of about 155 °C or greater. Processed for molding with respect to polycarbonates refer to the temperatures at which a polycarbonate containing composition is formed or processed. Typically, such processing temperatures are temperatures at which the composition flows, that is above the glass transition temperature. Polycarbonates have melting points of about 155 °C or greater. The particles have a second colorant bound to the surface of the particles by the organic polymer. The first colorant and second colorant separately in each occurrence comprise a pigment or a dye and the color of the first colorant and second colorant contrast from one another. The organic polymer may be crosslinked. The one or more polycarbonates may comprise post-consumer recycled polycarbonates. Disclosed are molded products prepared from the disclosed compositions. The molded products exhibit good properties as disclosed herein. The molded products have a flecked appearance. Manufacturers of such molded products can choose pigments and particles to provide distinctive color and flecked appearance to render the products recognizable.

One or more as used herein means that at least one, or more than one, of the recited components may be used as disclosed. As used herein percent by weight or parts by weight refer to, or are based on, the weight of the disclosed compositions unless otherwise specified. Unless otherwise stated such parts by weight are based on 100 parts. Flecked means the molded products disclosed have a plurality of contrasting discreet markings on the surface of the products which can be of regular or irregular shapes. Contrasting as used with respect to the markings means that the markings stand out from the main color of the molded product. The flecks comprise contrasting coloring that form discontinuous contrasting color shapes within the base or continuous color of the molded structures formed from the disclosed composition.

Polycarbonate as used herein means a polymer containing carbonate units. Such polymers may be homopolymers consisting essentially of carbonate monomer units or copolymers containing one or more other monomer units (co-monomer units) and carbonate units. Such copolymers may be block copolymers containing two or more blocks of different monomer units or may be random copolymers with the different monomer units randomly located along the polymer backbone. The other monomer units may comprise any monomer units that do not negatively impact the inherent properties of polycarbonates, for instance heat resistance, impact resistance, moldability, flexural modulus, bending strength, haze and transparency, where required for the intended use. Among exemplary comonomer units are ester units, polysiloxane units, and the like. The amount of carbonate monomer units in copolycarbonates is selected such that the resulting polymer retains the desirable properties of polycarbonates, for instance heat resistance, impact resistance, moldability, flexural modulus, bending strength, elongation, tensile strength and Notched Izod impact strength, where required for the intended use. The copolycarbonates may contain greater than 50 mole percent carbonate monomer units, about 75 mole percent or greater carbonate monomer units, about 80 mole percent or greater carbonate monomer units or about 85 mole percent or greater carbonate monomer units. The copolycarbonates may contain about 99 mole percent or less carbonate monomer units, about 97 mole percent or less carbonate monomer units or about 95 mole percent or less carbonate monomer units. The copolycarbonates may contain about 1 mole percent or greater co-monomer monomer units, about 3 mole percent or greater co-monomer monomer units or about 5 mole percent or greater co-monomer monomer units. The copolycarbonates may contain less than 50 mole percent co-monomer monomer units, about 25 mole percent or less co-monomer monomer units, about 20 mole percent or less co-monomer monomer units or about 15 mole percent or less co-monomer monomer units. The polycarbonate units may contain aromatic units in the backbone of the polymer.

The production of polycarbonates is affected, for example, by the reaction of diphenols with carbonic acid halides, preferably phosgene, and/or with aromatic dicarboxylic acid dihalides, preferably benzenedicarboxylic acid dihalides, by the phase boundary method, optionally with the use of chain terminators, e.g., monophenols, and optionally with the use of trifunctional branching agents or branching agents with a functionality higher than three, for example triphenols or tetraphenols. Diphenols useful to produce the aromatic polycarbonates and/or aromatic polyester carbonates may correspond to formula I 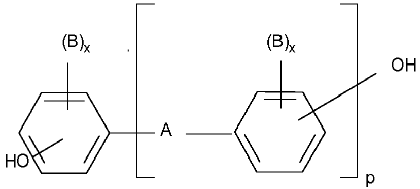
wherein A denotes a single bond, a C₁ - C₅ alkylene, a C₂ - C₅ alkylidene, a C₅ - C₆ cycloalkylidene, -O-, -SO-, -CO-, -S-, -SO2-, or a C₆ - C₁₂ arylene, on to which other aromatic rings, which optionally contain hetero atoms, can be condensed, or a radical of formula II or III: 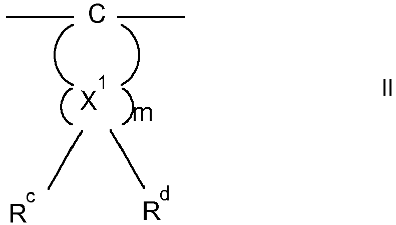 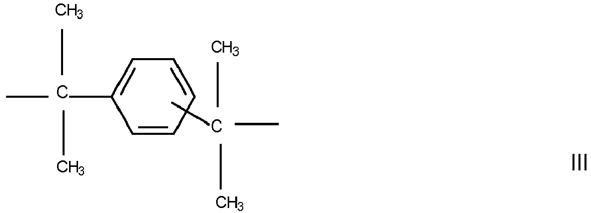
wherein B in each case is independently hydrogen, a C₁ - C₁₂ alkyl, preferably methyl, or a halogen, preferably chlorine and/or bromine;
x in each case is mutually independently 0, 1, or 2;
p is 0 or 1;
R^{c} and R^{d} are mutually independent of each other and are individually selectable for each X¹ and are hydrogen or a C₁ - C₆ alkyl, preferably hydrogen, methyl or ethyl; X¹ denotes carbon; and
m denotes an integer from 4 to 7, preferably 4 or 5, with the proviso that R^{c} and R^{d} simultaneously denote an alkyl on at least one X¹ atom.

Exemplary diphenols are hydroquinone, resorcinol, dihydroxybiphenyls, bis(hydroxyphenyl)-C₁-C₅ alkanes, bis(hydroxyphenyl)-C₅-C₆ cycloalkanes, bis(hydroxylphenyl)ethers, bis(hydroxyphenyl)sulfoxides, bis(hydroxyphenyl)ketones, bis(hydroxylphenyl)sulfones and 4,4"-bis(hydroxyphenyl)diisopropylbenzenes, as well as derivatives thereof which have brominated and/or chlorinated nuclei. Diphenols which are particularly preferred are 4,4'-dihydroxybiphenyl, bisphenol A, 2,4-bis(4-hydroxyphenyl)-2-methyl-butane, 1,1-bis(4-hydroxyphenyl)-cyclohexane, 1,1-bis(4-hydroxyphenyl)-3,3,5-trimethyl-cyclohexane, 4,4-dihydroxydiphenyl sulfide and 4,4-dihydroxydiphenyl sulfone, as well as di- and tetrabrominated or chlorinated derivatives thereof, such as 2,2-bis(3-chloro-4-hydroxyphenyl)propane, 2,2-bis-(3,5-dichloro-4-hydroxyphenyl)propane or 2,2-bis(3,5-dibromo-4-hydroxyphenyl)propane. 2, 2-bis-(4-hydroxyphenyl) propane (bisphenol A) is particularly preferred. The diphenols can be used individually or as arbitrary mixtures. The diphenols are known from the literature or can be obtained by methods known from the literature. Apart from bisphenol A homopolycarbonates, exmplary polycarbonates include copolycarbonates of bisphenol A with up to 15 mole percent, with respect to the molar sums of the diphenols, of other diphenols which are disclosed, such as 2,2-bis(3,5-dibromo-4-hydroxyphenyl)-propane.

Exemplary chain terminators for the production of the polycarbonates include phenolic compounds, exemplary phenolic compounds include phenol, p-chlorophenol, p-tert-butylphenol, 4-(1,3-dimethyl-butyl)-phenol and 2,4,6-tribromophenol; long chain alkylphenols, such as monoalkylphenols or dialkylphenols which contain a total of 8 to 20 C atoms in their alkyl substituents, exemplary are 3,5-di-tert-butyl-phenol, p-iso-octylphenol, p-tert-octylphenol, p-dodecylphenol, 2-(3,5-dimethylheptyl)-phenol and 4-(3,5-dimethylheptyl)-phenol. The amount of chain terminators used may be about 0.1 mole percent or greater based on the molar sum of the diphenols used in each case. The amount of chain terminators used may be about 10 mole percent or less based on the molar sum of the diphenols used in each case.

The polycarbonates can be branched in the known manner, for example by the incorporation of about 0.05 to about 2.0 mole percent, with respect to the sum of the diphenols used, of trifunctional compounds or of compounds with a functionality higher than three, for example those which contain three or more phenolic groups. Branched polycarbonates useful for the compositions disclosed can be prepared by known techniques, for example several methods are disclosed in USP 3,028,365; 4,529,791; and 4,677,162; which are hereby incorporated by reference in their entirety. Exemplary branching agents that may be used are tri- or multi-functional carboxylic acid chlorides, such as trimesic acid trichloride, cyanuric acid trichloride, 3,3'-,4,4'-benzophenone tetracarboxylic acid tetrachloride, 1,4,5,8-naphthalene-tetracarboxylic acid tetrachloride or pyromellitic acid tetrachloride for example, in amounts of about 0.01 to about 1.0 mole percent (with respect to the dicarboxylic acid dichlorides used) or tri- or multi-functional phenols such as phloroglucinol, 4,6-dimethyl-2,4,6-tris(4-hydroxyphenyl)-2-heptene, 4,4-dimethyl-2,4,6-tris(4-hydroxyphenyl)heptane, 1,3,5-tris(4-hydroxyphenyl)-benzene, 1,1,1-tris(4-hydroxyphenyl)ethane, tris(4-hydroxyphenyl)-phenyl-methane, 2,2-bis[4,4-bis(4-hydroxyphenyl)cyclohexyl]-propane, 2,4-bis[1-(4-hydroxyphenyl)-1-methylethyl]phenol, tetrakis(4-hydroxyphenyl)-methane, 2,6-bis(2-hydroxy-5-methyl-benzyl)-4-methyl-phenol, 2-(4-hydroxyphenyl)-2-(2,4-dihydroxyphenyl)propane, or tetrakis(4-[1-(4-hydroxyphenyl)-1-methylethyl]-phenoxy)-methane in amounts of about 0.01 to about 1.0 mole percent with respect to the diphenols used. Phenolic branching agents can be placed in the reaction vessel with the diphenols. Acid chloride branching agents can be introduced together with the acid chlorides.

Copolycarbonates, copolymers containing carbonate units and other monomer units, may be prepared by known processes in the art. In one exemplary embodiment, about 1 to about 25 parts by weight, about 2.5 to about 25 parts by weight (with respect to the total amount of diphenols to be used) of polydiorganosiloxanes comprising hydroxy-aryloxy terminal groups can also be used. These are known (see, for example, USP 3,419,634) or can be produced by methods known from the literature. The ester forming monomers may be utilized in the polycarbonate containing polymer preparation process. Exemplary ester forming monomers include dicarboxylic acid halides and hydroxycarboxylic acids. The aromatic dicarboxylic acid dihalides used for the production of the aromatic polyester carbonates may be the diacid dichlorides of isophthalic acid, terephthalic acid, diphenyl ether-4,4'-dicarboxylic acid and naphthalene-2,6-dicarboxylic acid. Mixtures of the diacid dichlorides of isophthalic acid and terephthalic in a ratio from about 1:20 to about 20:1 may be used. A carbonic acid halide, such as phosgene, may be used in conjunction as a difunctional acid derivative during the production of the polyester carbonates. The aromatic polyester carbonates may also contain incorporated hydroxycarboxylic acids. The polyester carbonates may be either linear or may be branched. Branching agents are disclosed hereinabove.

Apart from the monophenols, exemplary chain terminators to produce the aromatic polyester carbonates include chlorocarboxylic acid esters thereof, as well as the acid chlorides of aromatic monocarboxylic acids which may optionally be substituted by C-₁ - C₂₂ alkyl groups, or by halogen atoms, and also include aliphatic C₂ - C₂₂ monocarboxylic acid chlorides. The amount of chain terminator may be about 0.1 to about 10 mole percent in each case, with respect to the moles of diphenols in the case of phenolic chain terminators and with respect to the moles of dicarboxylic acid dichlorides in the case of monocarboxylic acid chloride chain terminators.

The polycarbonates or copolymers containing carbonate units may be derived from recycled materials, such as post-consumer recycled materials. The polycarbonates or copolymers containing carbonate units may contain 100 percent recycled materials or may contain any desired mixture of recycled and virgin material. Virgin material as used herein refers to material that has not been previously used. The recycled material may be linear, branched or a mixture thereof. The recycled material may be branched. The recycled material may be in flake form. The recycled material may be recycled from bottles or other structures wherein the used structures are shredded into flake form. The recycled material can be formed into other structures such as pellets. The use of the recycled material in flake form is the most efficient way to utilize the material. The recycled polycarbonates or copolymers containing carbonate units may contain impurities such as polyesters, for instance 0.1 to 1.0 or 0.1 to 0.25 percent by weight based on the recycled polycarbonates or copolymers containing carbonate units.

The composition containing polycarbonates and/or copolymers containing carbonate units may contain a sufficient amount of linear and/or branched polycarbonates and/or copolymers containing carbonate units to provide the desired properties as described in this application. The amount of the polycarbonates and/or copolymers containing carbonate units may be about 50 percent by weight or greater based on the weight of the composition containing polycarbonates and/or copolymers containing carbonate units, 60 percent by weight or greater or about 80 percent by weight or greater. The amount of the polycarbonates and/or copolymers containing carbonate units may be about 95 percent by weight or less based on the weight of the composition containing polycarbonates and/or copolymers containing carbonate units, about 90 percent by weight or less about 80 percent by weight or less or about 70 percent by weight or less.

The composition containing polycarbonates and/or copolymers containing carbonate units may contain a sufficient amount of linear polycarbonates and/or copolymers containing carbonate units to provide the desired properties as described in this application. The amount of the linear polycarbonates and/or copolymers containing carbonate units may be about 0 percent by weight or greater based on the weight of the composition containing polycarbonates and/or copolymers containing carbonate units, 5 percent by weight or greater or about 10 percent by weight or greater. The amount of the linear polycarbonates and/or copolymers containing carbonate units may be about may be about 90 percent by weight or less based on the weight of the composition containing polycarbonates and/or copolymers containing carbonate units, 80 percent by weight or less or about 70 percent by weight or less, 40 percent by weight or less, 20 percent by weight or less or about 15 percent by weight or less. Branched polycarbonates and/or copolymers containing carbonate units may comprise the remainder of the polycarbonates and/or copolymers containing carbonate units present in the composition.

The one or more polymers containing carbonate monomer units can comprise polycarbonates, co-polycarbonates or blends of polycarbonates and co-polycarbonates. The polycarbonates and/or co-polycarbonates may exhibit a mean weight average molecular weight sufficient to provide the desired properties to articles prepared from the polycarbonates and/or co-polycarbonates as described hereinbefore. The polycarbonates and/or co-polycarbonates may have a mean weight average molecular weights of about 5,000 or greater, about 15,000 or greater or about 20,000 or greater. The polycarbonates and/or co-polycarbonates may have a mean weight average molecular weight of about 40,000 or less, about 35,000 or less, or about 30,000 or less. Unless otherwise indicated, the references to polycarbonate and/or co-polycarbonate "molecular weight" herein refer to weight average molecular weights (Mw) determined by gel permeation chromatography (GPC) using laser scattering techniques with a bisphenol A polycarbonate standard and is given in units of grams per mole (g/mole). The melt flow rate (MFR) of the polycarbonate and/or co-polycarbonate may be sufficient to allow use of the blends to prepare desired articles therefrom. Preferably the melt flow rate is from about 3 to about 30 grams per 10 minutes (g/10 min) as determined at 300°C under a load of 1.2 kg. The test protocol is based on ASTM D1238.

The polycarbonates and/or co-polycarbonates may be used in pellet form, flake form, powder form or in a mixture thereof. Where used in powder form the particle size is selected for efficiently blending the materials. The particle size may be about 0.1 mm or greater or about 0.5 mm or greater. The particle size may be about 2.0 mm or less or about 1.5 mm or less.

The polycarbonates and/or copolymers used to prepare the compositions disclosed generally may have melt flow rates which provide the desired processing properties. The melt flow rates may be about 3 or greater, about 5 or greater, about 10 or greater or about 15 or greater. The melt flow rates may be about 30 or less, about 28 or less, about 20 or less, or about 15 or less. A mixture of polycarbonates and/or copolymers containing carbonate units with differing melt flow rates may be used to provide a composite melt flow rate to enhance processing of the compositions disclosed. The mixture of polycarbonates and/or copolymers containing carbonate units having different melt flow rates may contain polycarbonates and/or copolymers containing carbonate units having low melt flow rates and polycarbonates and/or copolymers containing carbonate units having high melt flow rates. Melt flow rates are determined by measuring the grams of a material which passes through a capillary having a diameter of 25.4 mm in a ten-minute period at 300 ° C under a load of 1.2, kilograms. The melt flow rates of the disclosed compositions may be about 5 grams/10 minutes or greater, 10 grams/10 minutes or greater or about 15 grams/10 minutes or greater. The melt flow rates of the disclosed compositions may be about 28 grams/10 minutes or less, 20 grams/10 minutes or less or about 10 grams/10 minutes or less. The melt flow rates of the disclosed compositions may be from about 5 grams/10 minutes to about 10 grams/10 minutes.

The composition disclosed contains a first colorant. The colorant can be any colorant that provides a desired matrix color to the molded product. The matrix color is the base color of the molded structure. The first colorant provides the continuous color to the molded product. The colorant may be a pigment or a dye. Exemplary pigments include carbon black, titanium dioxide, zinc sulfide, kaolin, and the like. The first colorant may be present in a sufficient amount to provide the molded structure with the desired base or matrix color. The first colorant may be present in an amount of about 0.01 percent by weight or greater of the disclosed composition, about 0.1 percent by weight or greater or about 1 percent by weight or greater. The first colorant may be present in an amount of about 5 percent by weight or less of the disclosed composition, about 1 percent by weight or less or about 0.5 percent by weight or less. Where the colorant is a pigment the concentration may be at the higher end of the disclosed range, for example from 0.1 to 5 percent by weight of the composition. Where the colorant is a dye the amount may be at the lower end of the range, for example from 0.01 to about 0.5 percent by weight of the composition.

The compositions disclosed contain particles having a melting point above the processing temperature of the one or more polycarbonates, and the compositions containing the polycarbonates, wherein the particles are coated with an organic polymer having a melting point above the processing temperature of the one or more polycarbonates, and the compositions containing the polycarbonates. Any particles having the desired melting points which can provide a flecked appearance to products molded from the disclosed compositions and which meet the disclosed fire-retardant requirements of the molded products may be used. Exemplary particle materials include metals, minerals, ceramics, polymers or glass. The particles may comprise synthetic or natural minerals. The particles may comprise mica, graphite, silicate clay, magnesium hydroxide, laponite, zirconium hydrogen phosphate, and the like. The particle may comprise mica. Exemplary polymers useful as particles include polyethylene terephthalate, polyimide, polyether ether ketone and polyetherimide. Exemplary ceramics useful as particles include aluminosilicates and borosilicates. Exemplary metals useful as particles include aluminum. The particles may have any shape or morphology which provides articles molded from the disclosed compositions with a flecked appearance and the desired fire retardancy. Exemplary shapes or morphologies include spherical, flakes, platelets, short fibers and the like. Some particles may be present in flake form.

The particles are coated with organic polymers. Organic polymers which have melting points above the melting point of the polycarbonates and/or copolymers containing carbonate units may be used herein. The organic polymers may be crosslinked. Where the organic polymers are crosslinked the melting point of the crosslinked polymers needs to be above the melting point of the polycarbonates and/or copolymers containing carbonate units. Exemplary coating polymers include one or more of polyepoxide, polyacrylate-siloxane, polyacrylate, polyepoxy-siloxane, polybenzoxazine, polysiloxane, polyurethane, urethane-acrylate, phenolic, and alkyd polymers, and the like. The organic polymers may comprise polyepoxides or a polyacrylate-siloxanes.

The organic polymers may bond a second colorant to the surface of the particles. The second colorant contrasts with the first colorant. The second colorant enhances the ability of the particles to provide a flecked appearance to the molded products. The second colorant can be any colorant which contrasts with the first colorant so as to form the flecks. The second colorant can be a dye or pigment. The exemplary dyes and pigments disclosed hereinbefore may be used as the second colorant as long as the second colorant contrasts with the first colorant.

The particles may be used in any amount which forms flecks in structures molded from the disclosed compositions. The particles may be present in an amount of about 0.01 percent by weight or greater based on the weight of the disclosed composition, about 0,01 percent by weight or greater or about 0.05 percent by weight or greater, or about 0.10 percent by weight or greater. The particles may be present in an amount of about 0.1 percent by weight or less based on the weight of the disclosed composition, about 0.30 percent by weight or less, about 0.15 percent by weight or less or about 0.10 percent by weight or less.

The particles have a particle size which provides a flecked appearance to the product molded from the compositions disclosed. Generally, the particles have a range of particles sizes and that range fits within the range of particles sizes disclosed as useful in the disclosed composition. The particle range of the particles may have a lower end of about 10 microns or greater, about 20 microns or greater or about 100 microns or greater. The particle range of the particles may have an upper end of about 700 microns or less, 500 microns or less or 300 microns or less.

The compositions containing one or more polycarbonate or copolymers containing carbonate units may contain one or more salts of a perflourohydrocarbyl sulfur compounds or aromatic sulfur compounds. The one or more salts of a perflourohydrocarbyl sulfur compounds may be one or more salts of perflouroalkane sulfur compounds. Any salts of perflourohydrocarbyl sulfur compounds or aromatic sulfur compounds that improve the fire retardancy of disclosed compositions may be used. The one or more salts of a perflourohydrocarbyl sulfur compounds or aromatic sulfur compounds may include one or more an alkali metal salt, an alkaline earth metal salt or both. For example, the one or more salts of a perflourohydrocarbyl sulfur containing compounds or aromatic sulfur compounds may include a potassium salt, a sodium salt, a magnesium salt, a calcium salt, or any combination thereof. The one or more salts of perflourohydrocarbyl sulfur containing compounds or aromatic sulfur compounds may include or consist essentially of one or more potassium salts. The one or more salts of a perflourohydrocarbyl sulfur containing compounds or aromatic sulfur compounds are salts including one or more sulfur atoms. The one or more salts of perflourohydrocarbyl sulfur containing compounds or aromatic sulfur compounds may be a sulfonate. The sulfur-containing salt (e.g., the sulfonate) may include one or more carbon containing groups. The number of carbon atoms in the sulfur-containing salt may be about 15 or less, about 13 or less, about 7 or less, or about 5 or less. The number of carbon atoms in the sulfur-containing salt may be 1 or more, 2 or more, 3 or more, or 4 or more. The carbon containing group may be acyclic or aromatic. The carbon containing group may include one or more halogen atoms (e.g., a fluorine, a chlorine, a bromine, or any combination thereof). By way of example, the carbon containing group may include a fluoroalkane having one or more fluorine atoms (e.g., a perfluoroalkane, such as a perfluorobutane, a perfluorohexane, a perfluoropentane, a perfluoroheptane, a perfluoropropane, or a perfluorooctane). The sulfur-containing salt may include or consist substantially of one or more potassium perfluoroalkanesulfonates, such as potassium perfluorobutanesulfonate, sodium p-toluenesulfonate or potassium diphenylsulfone sulfonate. The perflourohydrocarbyl salts or aromatic sulfur compounds may be present in an amount of about 0.05 percent by weight or greater of the polycarbonate or carbonate containing polymer containing composition or about percent by weight or greater or about 0.1 percent by weight or greater. The perflourohydrocarbyl metal salts or aromatic sulfur compounds may be present in an amount of about 2.0 percent by weight or less of the polycarbonate or carbonate containing polymer containing composition, about 1.0 percent by weight or less, less than 0.5 percent by weight, about 0.4 percent by weight or less or about 0.25 percent by weight or less.

The compositions containing polycarbonates or co-polymers containing carbonate units may contain one or more additional flame retardants commonly used in polycarbonate compositions. The flame retardant may be any flame retardant known for use in polycarbonate-based compositions which provide flame retardant properties and which do not negatively impact the impact, heat resistance, flexural modulus, bending strength, haze and transparency of the composition. Flame retardants may be used in a sufficient amount to meet the flame retardancy requirements for the final use and in an amount that does not deleteriously impact the properties of articles prepared from the compositions. Exemplary flame retardants include phosphorous containing compounds, such as oligomeric phosphates, poly(block-phosphonato-esters), and/or a poly(block-phosphonato-carbonates) see USP 7,645,850 which is incorporated in its entirety. Exemplary oligomeric phosphates include bisphenol-A bis(diphenyl phosphate) (BAPP). Exemplary additional fire retardants include 1, 3-phenylenetetrakis (2, 6-dimethylphenyl) ester (Daihachi PX-200). The one or more additional flame retardants may be present in an amount of about 0.1 percent by weight or greater based on the weight of the composition containing polycarbonates and/or copolymers containing carbonate units, about 1 percent by weight or greater or about 5 percent by weight or greater. The one or more additional flame retardants may be present in an amount of about 30 percent by weight or less based on the weight of the composition containing polycarbonates and/or copolymers containing carbonate units, about 20 percent by weight or less, or about 10 percent by weight or less.

The composition containing polycarbonates and/or copolymers containing carbonate units may further comprise a fluorinated antidrip agent. Antidrip means to reduce the tendency of the composition to form burning drips in the event of a fire. Fluorinated polyolefins known in the art as antidrip agents may be used in the compositions of the invention. Exemplary fluorinated polyolefins are described in EP-A 0 640 655. They are marketed under the brand name Teflon® 30N by DuPont.

The composition containing polycarbonates and/or copolymers containing carbonate units may further contain at least one or more additives commonly used in polycarbonate-based compositions. For example, one such additive comprises one or more lubricants, for example mineral oil, epoxidized soybean oil, or the like; a nucleating agent; an anti-static agent; a stabilizer; a filler and/or a reinforcing material such as glass fibers, carbon fibers, metal fibers, metal coated fibers, thermoset fibers, glass beads, mica, silicates, quartz, talc, titanium dioxide, and/or wollastonite alone or in combinations; a dye; or a pigment. One such stabilizer is present to minimize ester-carbonate interchange. Such stabilizers are known in the art, for example see USP 5,922,816; 4,532,290; 4,401,804, all of which are incorporated herein by reference, and may comprise certain phosphorous containing compounds that include phosphoric acid, certain organic phosphorous compounds such as distearyl pentaerythritol diphosphate, mono or dihydrogen phosphate, or mono-, di-, or trihydrogen phosphate compounds, phosphate compounds, and certain inorganic phosphorous compounds such as monosodium phosphate and monopotassium phosphate, silyl phosphates, and silyl phosphate derivatives, alone or in combination. Such compositions may contain plasticizers commonly used in polycarbonate compositions useful in laminates.

The composition may contain a stabilizer salt. The stabilizer salt may be any compound that is a basic buffer which functions to prevent basic materials in the composition from causing the polycarbonates or copolymers containing carbonate units from depolymerizing. Exemplary classes of stabilizer salts include those disclosed in US 2013/0131241, incorporated herein by reference, in particular acids, acid salts and esters of acids derived from a phosphorous containing acid such as phosphoric acid, phosphorous acid, hypophosphorous acid, hypophosphoric acid, phosphinic acid, phosphonic acid, metaphosphoric acid, hexametaphosphoric acid, thiophosphoric acid, fluorophosphoric acid, difluorophosphoric acid, fluorophosphorous acid, difluorophosphorous acid, fluorohypophosphorous acid, fluorohypophosphoric acid or their combinations. A combination of a phosphorous containing acid and an ester of a phosphorous containing acid may be used used. Alternatively, acids, acid salts and esters of acids, such as, for example, sulphuric acid, sulphites, zinc phosphate, mono calcium phosphate, and the like, may be used. In particular embodiments, the acid stabilizer is phosphorous acid (H₃PO₃), phosphoric acid (H₃PO₄), zinc phosphate (Zn₃(PO₄)₂), zinc dihydrogen phosphate (ZnH₄P₂O₈), mono sodium phosphate (NaH₂PO₄), or sodium acid pyrophosphate (Na₂H₂P₂O₇), and the like. The stabilizer salt may be present in sufficient amount to prevent depolymerization of the polycarbonates or copolymers of polycarbonates. The stabilizer salt may be present in an amount of about 0.05 percent by weight or greater of the composition containing one or more polycarbonates and/or copolymers containing carbonate units. The stabilizer salt may be present in an amount of about 0.5 percent by weight or less of the composition containing one or more polycarbonates and/or copolymers containing carbonate units.

The composition containing one or more polycarbonates and/or copolymers containing carbonate units may contain antioxidants. The antioxidants may be present in sufficient amount to prevent oxidation of the compositions and structures formed. Exemplary antioxidant additives include, for example, organophosphites such as tris(nonyl phenyl)phosphite, tris(2,4-di-t-butylphenyl)phosphite (e.g., "IRGAFOS 168" or "I-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxy phenyl)propionate, pentaerythrityl-tetrakis[3-(3,5-di-tert-butyl-4-hydroxyphenyl) propionate or the like; amides of beta-(3,5-di-tert-butyl-4-hydroxyphenyl)-propionic acid or the like, or combinations comprising at least one of the foregoing antioxidants. Antioxidants may be used in amounts of 0.0001 to 1 weight percent of the composition containing one or more polycarbonates and/or copolymers containing carbonate units. The antioxidants may be present in an amount of about 200 ppm to 2000 ppm of the one or more polycarbonates and/or copolymers containing carbonate units.

The compositions disclosed may be produced by mixing the components in a known manner and melt-compounding and/or melt-extruding them at temperatures of from 200°C to 300°C in conventional units such as internal kneaders, extruders and twin-screw extruders. The individual components may be mixed in a known manner both in succession and simultaneously and both at approximately 23°C (room temperature) and at a higher temperature. Where a twin-screw extruder is used the coated particles may be added after the first set of screws, that is after the kneading screws.

The disclosed compositions may be molded using procedure known in the art. The polycarbonate compositions may be molded into useful shaped articles by a variety of means such as injection molding, overmolding, extrusion, rotational molding, blow molding and thermoforming to form various molded articles. Such articles may include thin-walled articles for consumer goods like cellphones, MP3 players, computers, laptops, cameras, video recorders, electronic tablets, hand receivers, kitchen appliances, electrical housings, etc., e.g. a smart meter housing, and the like; electrical connectors, and components of lighting fixtures, ornaments, home appliances, roofs, greenhouses, sun rooms, swimming pool enclosures, Light Emitting Diodes (LEDs) and light panels, extruded film and sheet articles; electrical parts, such as relays; and telecommunications parts such as parts for base station terminals. The present disclosure further contemplates additional fabrication operations on said articles, such as, but not limited to, molding, in-mold decoration, baking in a paint oven, lamination, and/or thermoforming. The compositions disclosed are heated to temperatures at which the composition flows, which may be above the glass transition temperatures of the polycarbonates in the composition. Such temperatures may be greater than 155 °C, above 200 °C or greater, 250 °C or greater. Such temperatures may be 400 °C or less or 300 °C or less. The mold may be heated to facilitate processing such as to 60 °C or greater, 80 °C or greater or 100 °C or greater.

The UL-94 vertical test (20 mm vertical burn test) in the UL standards is a measuring method used for an index of flame retardancy in an unexpanded resin. The purpose of the test is to determine the resistance of plastic materials used for parts in devices and appliances to flame and glow propagation. UL 94 is used to measure burning rate and characteristics based on standard samples. Sample size is 12.7mm by 127mm, with the thickness varying. Thickness must be reported when a rating is given. The relevant ratings are: V-2, V-1 and V-0. "V-0" is the most common rating seen parts where increases in protection from combustion is required. V-0 carries the following requirements:
1. None of the five samples can have flaming combustion for more than 10 seconds after each of two 10 second flame applications.
2. The total flaming combustion time for the ten 10 second flame applications (5 samples, 2 applications each) of more than 50 seconds.
3. None of the five samples may burn with flaming or glowing combustion up to the holding clamp.
4. None of the five samples may drip flaming particles which ignite dry absorbent cotton located 305mm below the sample.
5. None of the five samples may have glowing combustion which persists for more than 30 seconds after the second removal of the flame.
The other ratings have a similar format. The most significant difference in the ratings are the times the samples are allowed to support flaming or glowing combustion. The flame application time is the same. Here is a short summary of the V-0, V-1 and V-2 required results: V-0 burning stops within 10 seconds after two applications of ten seconds each of a flame to a test bar and no flaming drips are allowed; V-1 burning stops within 60 seconds after two applications of ten seconds each of a flame to a test bar, and no flaming drips are allowed; and V-2 burning stops within 60 seconds after two applications of ten seconds each of a flame to a test bar and flaming drips are allowed.

The test procedure is summarized here. Test specimens having a specific size are perpendicularly attached to a clamp, flame contact is performed for 10 seconds by 20 mm flame. Each of five specimens is clamped 300 mm above a layer of dry cotton. A calibrated flame is applied to the bottom edge of the vertically supported test bar for 10 seconds and any after flame time (t1) is noted. When after flaming ceases the flame is reapplied for an additional 10 seconds and after flame time (t2) and afterglow time (t3) is noted. If one specimen fails, a second set of five can be tested. More details can be acquired by contacting UL or obtaining a copy of this and other UL Standards by visiting the UL's Standards Department web site, at http://ulstandardsinfonet.ul.com. The Table below, defines the specific criteria for V-0, V-1 and V-2 ratings.

**TABLE**

| Criteria Conditions | V-0 | V-1 | V-2 |
|---|---|---|---|
| Afterflame time for each individual specimen T1 or T2 | ≦10 s | ≦30 s | ≦30 s |
| Total afterflame time for any condition set (T1 plus T2 for the 5 specimens) | ≦50 s | ≦250 s | ≦250 s |
| Afterflame plus afterglow time for each individual specimen after the second flame application (T2 + T3) | ≦30 s | ≦60 s | ≦60 s |
| Afterflame or afterglow of any specimen up to the holding clamp | No | No | No |
| Cotton indicator ignited by flaming particles or drops | No | No | Yes |

### Embodiments

1. A composition comprising: a) one or more polycarbonates; b) one or more first colorants; c) one or more flame retardants; and d) one or more particles having a melting point above the processing temperature at which polycarbonates are molded wherein the particles are coated with an organic polymer having a melting point above processing temperature of the one or more polycarbonates; wherein the composition when molded exhibits a flecked appearance.
2. The composition according to embodiment 1 wherein the particles have a second colorant bound to the surface of the particles by the organic polymer.
3. The composition according to embodiment 1 or 2 wherein the organic polymer is crosslinked.
4. The composition according to any one of the preceding embodiments wherein the particles are metal, mineral, ceramic, polymeric, or glass.
5. The composition according to any one of the preceding embodiments wherein the particles have a particle size range in the range of from about 20 to about 700 microns.
6. The composition according to any one of the preceding embodiments wherein the particles comprise a synthetic or natural mineral.
7. The composition according to any one of the preceding embodiments wherein the particles comprise mica, graphite, silicate clay, magnesium hydroxide, laponite, zirconium hydrogen phosphate.
8. The composition according to any one of the preceding embodiments wherein the particles are spherical, flakes and/or platelets.
9. The composition according to any one of the preceding embodiments wherein the particle comprises mica.
10. The composition according to any one of the preceding embodiments wherein the organic polymer comprises one or more polyepoxide, polyacrylate-siloxane, polyacrylate, polyepoxy-siloxane, polybenzoxazine, polysiloxane, polyurethane, urethane-acrylate, phenolic and alkyd polymers.
11. The composition according to any one of the preceding embodiments wherein the organic polymer comprises a polyepoxide or a polyacrylate-siloxane copolymer.
12. The composition according to any one of the preceding embodiments wherein the particles are present in the composition in an amount of about 0.01 to about 0.30 percent by weight based on the weight of the composition.
13. The composition according to any one of the preceding embodiments wherein the particles are present in the composition in an amount of about 0.05 to about 0.15 percent by weight based on the weight of the composition.
14. The composition according to any one of the preceding embodiments wherein the one or more polycarbonates comprise post-consumer recycled polycarbonate.
15. The composition according to any one of the preceding embodiments wherein the one or more polycarbonates comprise post-consumer recycled polycarbonate and virgin polycarbonate.
16. The composition according to any one of the preceding embodiments wherein the one or more polycarbonates comprise post-consumer recycled polycarbonate.
17. The composition according to any one of the preceding embodiments wherein the one or more polycarbonates comprise post-consumer recycled polycarbonate and two or more virgin polycarbonates having different melt flow rates.
18. The composition according to any one of the preceding embodiments wherein the one or more polycarbonates comprise one or more virgin polycarbonates that is branched and one or more virgin polycarbonates that is linear.
19. The composition according to any one of the preceding embodiments which contains an impact modifier.
20. The composition according to any of the preceding embodiments containing from about 0.5 to about 50 percent by weight of the impact modifier based on the weight of the composition.
21. The composition according to any one of Embodiments 6 and 7 having a dispersed phase comprising an impact modifier.
22. The composition according to any one of the preceding embodiments wherein the dispersed phase comprises impact modifier particles of about 0.05 to about 6.0 microns.
23. The composition according to any one of the preceding embodiments wherein the impact modifier is a butadiene rubber or a core shell rubber.
24. The composition according to any one of the preceding embodiments wherein the first colorant and second colorant separately in each occurrence comprise a pigment or a dye and the color of the first colorant and second colorant contrast from one another.
25. The composition according to any one of the preceding embodiments wherein a molded structure prepared from the composition exhibits a UL 94 Rating at 1.5 mm thickness of V-0 or at a 1.0 mm thickness of V-1.
26. The composition according to any one of the preceding embodiments wherein the particles have a particle size range within the range of about 10 to about 700 microns.
27. The composition according to any one of the preceding embodiments wherein the particles have a particle size range within the range of about 20 to about 500 microns.
28. The composition according to any one of the preceding embodiments wherein the particles have a particle size range within the range of about 100 to about 300 microns.
29. A molded article according to any one of the preceding embodiments having a flecked appearance which exhibits a UL 94 Rating at 1.5 mm thickness of V-0 or at a 1.0 mm thickness of V-1.
30. A method comprising contacting a composition according to any one of embodiments 1 to 28, melting the composition and blending the composition.
31. A method according to Embodiment 30 wherein the blended composition is pelletized.
32. A composition comprising pellets formed from the composition of any one of Embodiments 1 to 28.
33. A method comprising melting pellets according to Embodiment 32 and injecting the melted composition into a mold in molten form, cooling the composition to form a molded structure and removing the molded structure from the mold.

### ILLUSTRATIVE EMBODIMENTS

The following examples are provided to illustrate the disclosed materials, but are not intended to limit the scope thereof. All parts and percentages are by weight unless otherwise indicated.

Test specimens are molded as described. The pellets of the polycarbonates utilized are dried, for example in an air draft oven for 4 hours at 120°C. The pellets are used to prepare test specimens, for example on a 110 ton CREATOR CI-110 injection molding machine, having the following molding conditions: Barrel temperature of 280°C; mold temperature of 60°C; Injection time: 3 second; Holding time: 5 second; cooling time 20 seconds; holding pressure: 230 bar; back pressure: 2.5 turns; and screw speed: 3.8. The molded structures are dogbones specified for the ASTM testing described hereinbefore or plaques having a size of 8 x 120 x 3 cm.

Table 1 shows the compositions tested and the results of the testing.

**Table 1**

| Ingredient\Example | **Exp0** | **Exp1** | **Exp2** | **Exp3** | **Exp4** | **Exp5** | **Exp6** | **Exp7** |
|---|---|---|---|---|---|---|---|---|
| **flecks type** | | M/E | M/E | M/E | M/S/A | M/S/A | M/S/A | M/S/A |
| **flecks size** | | DM5 | DM5 | DM5 | S30 | S50 | S75 | S30 |
| **Fleck dosage** | **0** | **0.3** | **0.1** | **0.08** | **0.08** | **0.08** | **0.08** | **0.15** |
| Polycarbonate branched 3 MFR | 38.50 | 38.10 | 38.30 | 38.32 | 38.32 | 38.32 | 38.32 | 38.25 |
| **Polycarbonate PCR 16 MFR** | 50 | 50 | 50 | 50 | 50 | 50 | 50 | 50 |
| Polycarbonate Powder 10 MFR | 6 | 6 | 6 | 6 | 6 | 6 | 6 | 6 |
| Impact Modifier | 1.5 | 1.5 | 1.5 | 1.5 | 1.5 | 1.5 | 1.5 | 1.5 |
| Anti-dripping agent | 0.8 | 0.9 | 0.9 | 0.9 | 0.9 | 0.9 | 0.9 | 0.9 |
| Charring salt | 0.2 | 0.2 | 0.2 | 0.2 | 0.2 | 0.2 | 0.2 | 0.2 |
| Mold release agent | 0.6 | 0.6 | 0.6 | 0.6 | 0.6 | 0.6 | 0.6 | 0.6 |
| Anti-oxidant | 0.2 | 0.2 | 0.2 | 0.2 | 0.2 | 0.2 | 0.2 | 0.2 |
| Benzotriazole UV Absorber | 0.2 | 0.2 | 0.2 | 0.2 | 0.2 | 0.2 | 0.2 | 0.2 |
| Titanium Dioxide | 2 | 2 | 2 | 2 | 2 | 2 | 2 | 2 |
| Solvent Red 179 dye | 0.0002 | 0.0002 | 0.0002 | 0.0002 | 0.0002 | 0.0002 | 0.0002 | 0.0002 |
| Color Pigment Blue 29-6 | 0.005 | 0.005 | 0.005 | 0.005 | 0.005 | 0.005 | 0.005 | 0.005 |
| total | 100.0 | 100.0 | 100.0 | 100.0 | 100.0 | 100.0 | 100.0 | 100.0 |
| **UL 94 Rating @ 1.5 mm** | **V0** | **V-1** | **V-1** | **V-0** | **V-0** | **V-0** | **V-0** | **V-0** |
| Total burning time (s) | 34 | 70 | 72 | 27 | 30 | 26 | 24 | 42 |
| MFR @ 300oC/1.2 kg (g/10min) | 10 | 8.8 | 9.2 | 9.0 | 9.2 | 9.2 | 9.1 | 8.6 |
| Tensile strength at yield (MPa) | 60 | 66 | 62 | 62 | 60 | 62 | 62 | 60 |
| Tensile strength at break (MPa) | 57 | 50 | 48 | 48 | 49 | 50 | 45 | 47 |
| Tensile elongation at yield (%) | 5 | 6 | 5 | 5 | 4 | 6 | 7 | 4 |
| **Tensile elongation at break (%)** | **110** | **12** | **49** | **93** | **91** | **53** | **56** | **80** |
| **Noteched Izod impact strenqth (J/m)** | **814** | **525** | **654** | **700** | **750** | **715** | **726** | **715** |
| Note: | M/E = Mica/Epoxy | | | M/S/A = Mica/Silicone/Acrylic | | | | |
| | DM5: > 80% Mica at size 36∼166 mesh = 535∼200 micron | | | | | | | |
| | S30: > 55% Mica at size 54 ∼106 mesh = 355∼106 micron | | | | | | | |
| | S50: > 93% Mica at size 178∼130 mesh = 105∼125 micorn | | | | | | | |
| | S75: > 80% Mica at size 38 ∼130 mesh = 500∼125 micron | | | | | | | |

Based on the framework of incumbent UL94 V0 @1.0 mm polycarbonate resins Example 0, this molded product s developed by adjusting the flame retardant package and dosing different levels of particles. Two types of mica-based particles, Mica coated with and epoxy resin and Mica coated with a Silicone/Acrylic, are selected for use.

Comparing Examples 1 and 2 to Example 3 for the same size and type of mica particle DM5, which contains 80% mica at sizes about 200∼535 mm, higher concentrations from 0.1 to 0.3% in the PC matrix will cause the reduction of the frame retardancy rating from V0 @ 1.5 mm of Exp0 to V1 @ 1.5 mm. Reducing the concentration of DM5, the PC resin, Exp 3, can achieve V0 @ 1.5 mm.

The impact strength is affected by concentrations of the mica particles. The higher the dosage, the lower the notched Izod impact strength. at concentrations of 0.3%, 0.1%, 0.08% and 0% of mica particles in Examples 1, 2, 3 and 0, respectively, the notched Izod achieves 525, 654, 700 and 813 J/m respectively.

Ductility is impacted by the quantity of the mica particles. The tensile elongation is 12%, 49%, 93% and 110% for Examples 1, 2, 3 and 0 resins, respectively, due to different amounts of particles at 0.3%, 0.1%, 0.08% and 0%.

Compositions containing the flame retardant package of Example 0, and having 0.08% of small size mica particles at 200-535 µm containing post consumer recycled polycarbonate, PCR, achieve V0 @ 1.5 mm, 93% tensile elongation and the impact strength of 700 J/m, see Example 3.

Even smaller mica particles illustrate the use PCR with appealing surface aesthetics. Comparing different sizes of mica particles for Examples 4 to 6 with an identical concentration of 0.08%, the compositions achieve UL94 V0 at 1.5 mm. The sizes of 106∼355, 105∼125, and 125∼500 µm do not make a difference in terms of achieving the V0 rating due to low concentration of 0.08%.

Comparing 0.08% and 0.15% mica particles in Examples 4 and 7, respectively, the ductility and impact strength are slightly reduced from 91% to 80% tensile elongation and 750 to 715 J/m notched Izod impact strength. The results are consistent with the findings in Examples 0 to 3.

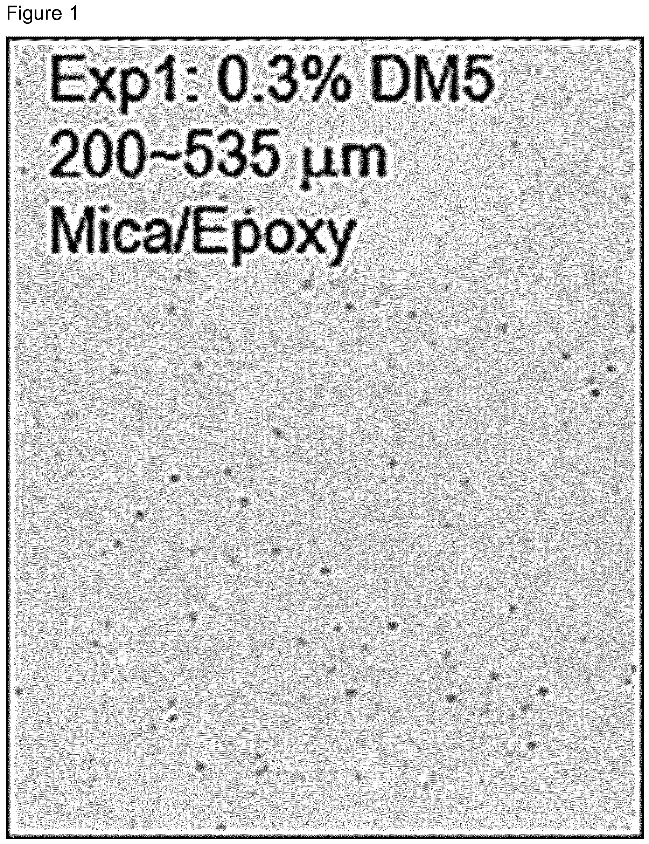

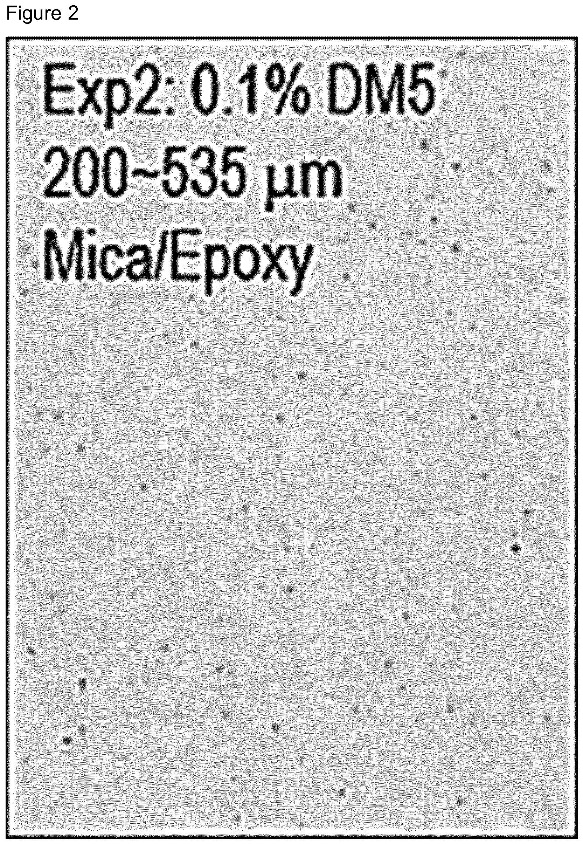

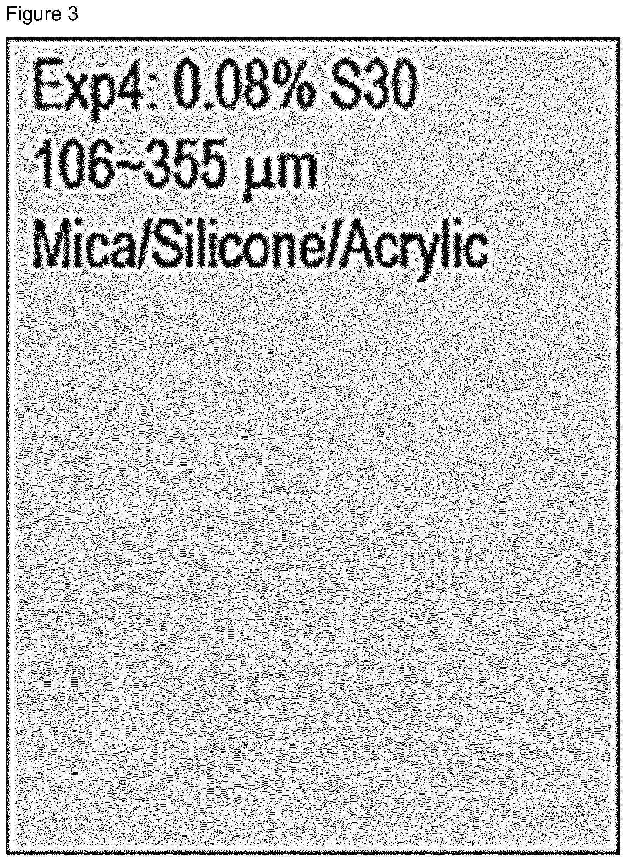

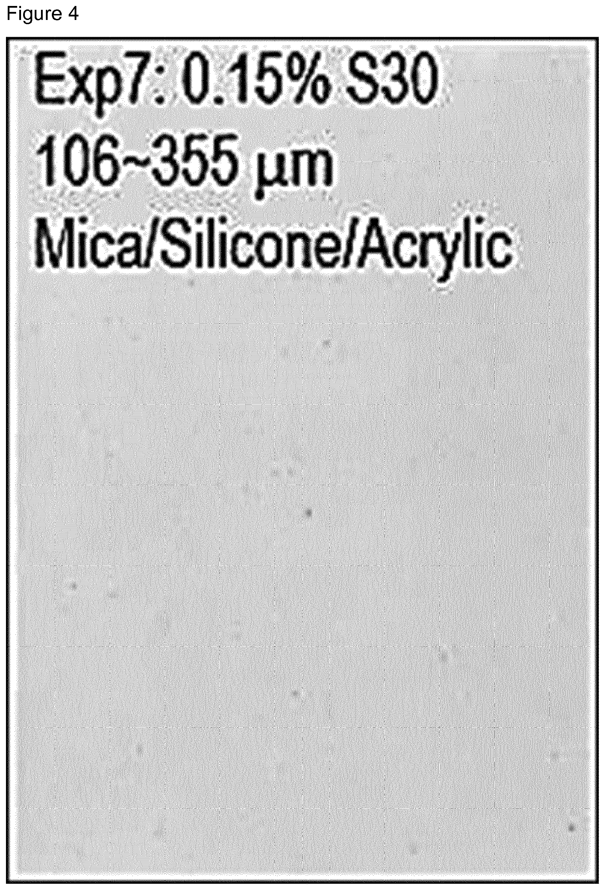

Fig.1 to 4 shows the flecked effects on molded plaques of Examples 1, 2, 4 and 7 respectively. Different fleck particle sizes and quantity demonstrate different density of the particles on the white plaques to indicate the use of Post-consumer recycled polycarbonate.

A larger quantity of flecks illustrate larger density of particles on the white surface. Examples1 and 2 have the fleck particle DM5 at a size of 200∼535 mm with the dosage of 0.3% and 0.1% for Examples 1 and 2, respectively. Examples 4 and 7 have the S30 particles with 0.08% and 0.15% concentration, respectively.

Comparing Examples 2 and 4 that use different sizes offlecks at , the smaller size particles 106∼355 µm for Example 4 shows less dense effects than the larger size particles 200∼535 µm for Example 2. Particle size is the determining factor and is more pronounced than concentration of the particles.

Fig.1 to 4 show the particles effects on molded plaques. Different particle sizes and quantity demonstrate different density of the flecks on the white plaques.

A larger quantity of particles illustrate a larger density of flecks on the white surface. Examples 1 and 2 use DM5 particles having a size of 200∼535 mm with the dosage of 0.3% and 0.1%, respectively. Examples 4 and 7 use the S30 particles with 0.08% and 0.15% concentration, respectively.

Examples 2 and 4 compare the use of different types of particles at different sizes, and show that a smaller size particles 106∼355 µm of 4 shows less dense effects than larger size particles 200∼535 µm of 2. Particle size is the determining factor and is more pronounced than its concentration.

Parts by weight as used herein refers to 100 parts by weight of the composition specifically referred to. Any numerical values recited in the above application include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value, and the highest value enumerated are to be considered to be expressly stated in this application in a similar manner. Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

## Claims

**1.** A composition comprising:
a) one or more polycarbonates;
b) one or more first colorants;
c) one or more flame retardants; and
d) one or more particles having a melting point above the processing temperature at which polycarbonates are molded wherein the particles are coated with an organic polymer having a melting point above processing temperature of the one or more polycarbonates;
wherein the composition when molded exhibits a flecked appearance.

**2.** The composition according to Claim 1 wherein the particles have a second colorant bound to the surface of the particles by the organic polymer.

**3.** The composition according to Claim 1 or 2 wherein the organic polymer is crosslinked.

**4.** The composition according to any one of the preceding claims wherein the particles are metal, mineral, ceramic, polymeric, or glass.

**5.** The composition according to any one of the preceding claims wherein the particles have a particle size range in the range of from about 20 to about 700 microns.

**6.** The composition according to any one of the preceding claims wherein the particles comprise a synthetic or natural mineral.

**7.** The composition according to any one of the preceding claims wherein the particle comprises mica.

**8.** The composition according to any one of the preceding claims wherein the organic polymer comprises one or more polyepoxide, polyacrylate-siloxane, polyacrylate, polyepoxy-siloxane, polybenzoxazine, polysiloxane, polyurethane, urethane-acrylate, phenolic and alkyd polymers.

**9.** The composition according to any one of the preceding claims wherein the particles are present in the composition in an amount of about 0.01 to about 0.30 percent by weight based on the weight of the composition.

**10.** The composition according to any one of the preceding claims wherein the first colorant and second colorant separately in each occurrence comprise a pigment or a dye and the color of the first colorant and second colorant contrast from one another.

**12.** The composition according to any one of the preceding claims wherein the particles have a particle size range within the range of about 10 to about 700 microns.

**13.** A molded article according to any one of the preceding claims having a flecked appearance which exhibits a UL 94 Rating at 1.5 mm thickness of V-0 or at a 1.0 mm thickness of V-1.

**14.** A composition comprising pellets formed from the composition of any one of the preceding claims.

**15.** A method comprising melting pellets according to Claim 14 and injecting the melted composition into a mold in molten form, cooling the composition to form a molded structure and removing the molded structure from the mold.
